# EUROPEAN PATENT SPECIFICATION

(11) **EP 2 542 606 B1**
(45) Date of publication and mention of the grant of the patent: **15.04.2015**
(21) Application number: 11707288.4
(22) Date of filing: 24.02.2011
(51) Int. Cl.: C08G 18/32, C08G 18/66, C08G 18/80

(54) **MELT PROCESSABLE COPOLYUREA ELASTOMERS**
SCHMELZVERARBEITBARE COPOLYHARNSTOFFELASTOMERE
ÉLASTOMÈRES DE COPOLYMÈRE DE POLYURÉE POUVANT ÊTRE TRAITÉS À L'ÉTAT FONDU

(30) Priority: 01.03.2010 US 309079 P
(43) Date of publication of application: 09.01.2013
(73) Proprietor: Lubrizol Advanced Materials, Inc., Cleveland, OH 44141-3247 (US)
(72) Inventor: STEINMETZ, Bryce, W., Medina, Ohio 44256 (US); MAKAL, Umit, G., Stow, Ohio 44224 (US)
(74) Representative: Von Kreisler Selting Werner - Partnerschaft von Patentanwälten und Rechtsanwälten mbB
(86) International application number: PCT/US2011/026023
(87) International publication number: WO 2011/109213

(56) References cited:
- US-A- 3 893 978
- US-A- 4 782 128
- US-A- 5 583 196

## Description

### BACKGROUND OF THE INVENTION

The present invention relates to melt processable polyurea and/or copolyurea elastomers, and more specifically polyurea and/or copolyurea elastomers that may be prepared in a continuous manner, including elastomers that may be prepared in a reactive extruder and/or similar equipment.

Polyureas and/or copolyureas are elastomers typically derived from the reaction of an isocyanate and a synthetic resin blend component via a step-growth polymerization. The resin blend component usually includes amine-terminated polymer resins. Processes for preparing copolyurea elastomers generally utilize a prepolymer and cannot be completed in a continuous manner. Related to these drawbacks, the amine-terminated polymer resins used to prepare these materials cause some other issues. Amines react so rapidly with isocyanate groups that the reaction is difficult to control such that the use of copolyurea elastomers is generally restricted to reaction injection molding (RIM) processes. Even in RIM processes, it has been found generally necessary to employ sterically hindered aromatic amine chain extenders like diethyltoluenediamine (DETDA) in order to slow the polymerization reaction enough so that a molded article can be made. Further, amines are known to engage in a variety of secondary reactions with isocyanates at room temperature, causing undesirable cross linking and gel formation in polyurea-containing polymers. It would be desirable to provide a polyurea polymer which is more easily processable.

In addition, it is always beneficial to provide polymers having improved physical properties and processability.

Accordingly, it would be desirable to provide a process for preparing copolyurea elastomers which provides for greater processing flexibility and a product polymer having physical properties which are equivalent to or superior than those exhibited by conventionally prepared copolyurea polymers.

US 5 583 196 discloses a polyurethane and/or polyurethane urea elastomer in the form of a thermostable processable melt, obtained by reacting a caprolactam-terminated polyisocyanate prepolymer with a alkylene diol or diamine. The amount of residual lactam monomer of the lactam-terminated polyisocyanate is not specified.

### SUMMARY OF THE INVENTION

The present invention provides a melt processable polyurea and/or copolyurea elastomer comprising polyurea segments derived from a lactam-terminated diisocyanate and an alkylene diol. The polyurea and/or copolyurea elastomers of the present invention may be obtained by polymerizing (a) a lactam-terminated diisocyanate and (b) an alkylene diol of the general formula HO-R-OH wherein R is an alkylene group containing from 2 to 20 carbon atoms. The term lactam-terminated diisocyanate as used herein refers to the reaction product of diisocyanate and lactam monomers. In some embodiments, the polymerization takes place in the presence of an alkaline catalyst. The lactam-terminated diisocyanate used in the preparation of the elastomer contains less than 5 percent by weight residual lactam monomer.

The invention also provides copolyurea elastomers where the structures of the elastomers further include segments of soft blocks derived from a hydroxy-terminated compound and/or segments of hard blocks derived from lactam monomers. The hydroxy-terminated compounds may be a polyether, a polyester, a polycarbonate, a polycaprolactone or combinations thereof. Also included are copolyesterurea elastomers and copolyetherurea elastomers where the soft segments are derived from an alkylene diol component such as a polyether diol, a polyester diol, or combinations thereof.

The invention further provides a process of preparing the melt processable polyurea and/or copolyurea elastomers described herein. The process includes the steps of: polymerizing (a) a lactam-terminated diisocyanate and (b) an alkylene diol, optionally in the presence of an alkaline catalyst; wherein the alkylene diol is of the general formula HO - R - OH, wherein R is an alkylene diol containing 2 to 20 carbon atoms and the lactam-terminated diisocyanate contains less than 5 percent by weight of residual lactam monomer. The described polymerization can occur in an internal mixing apparatus, such as an extruder. The present invention provides where any of the described polyurea and/or copolyurea elastomers are produced in a continuous and/or partially continuous manner as well as the continuous and/or partially continuous processes thereof.

The invention also relates to the articles of manufacture which may be prepared from the elastomers described herein. Such articles may be manufactured by injection molding, compression molding and/or extrusion. Such articles may be manufactured using the procedures and techniques generally used with thermoplastic polymers.

### DETAILED DESCRIPTION OF THE INVENTION

Various features and embodiments of the invention will be described below by way of non-limiting illustration.

### The Polyurea and/or Copolyurea

The present invention provides a melt processable polyurea and/or copolyurea elastomer. The elastomers of the present invention are not prepared by the typical process of reacting an isocyanate with a polyamine and/or an amine-terminated polymer resin. The typical process is very exothermic and hard to control, often requiring the reaction to be carried out in the presence of a solvent and/or some other exotherm-controlling feature. This is inefficient and leads to increased material costs and reduced capacity. There is need for a more efficient way of producing polyurea and/or copolyurea elastomers and ideally polyurea and/or copolyurea elastomers that are melt processable. That is, there is a need for polyurea and/or copolyurea elastomers that can be produced continuously.

The elastomers of the present invention include melt processable polyurea and/or copolyurea elastomer comprising polyurea segments derived from a lactam-terminated diisocyanate and an alkylene diol. The lactam-terminated diisocyanate and alkylene diol are polymerized, forming the polyurea segments that make up the elastomers of the present invention.

Alkylene diols suitable for use in the present invention include diols of the general formula HO-R-OH wherein R is an alkylene group containing from 2 to 20 carbon atoms, or from 2 or 4 to 6 or 8 carbon atoms.

The present invention also includes melt processable copolyurea elastomers where the elastomer contains at least one segment of polyurea units and further contains (i) at least one segment of soft blocks, (ii) at least one segment of hard blocks, or (iii) combinations thereof. The soft block segments may be derived from a hydroxy-terminated compound. The hard block segments may be polyamide blocks derived from a lactam monomer.

The weight percent of polyurea segments to the optional soft block and/or hard block segments in the elastomer is not overly limited and may be adjusted to obtain the desired physical properties of the resulting elastomer. In some embodiments, the weight percent of polyurea segments in the elastomer is from 10% to 90%, or from 10% to 60%, or from 20% to 40%.

The optional soft blocks are derived from one or more hydroxy-terminated compounds. Suitable hydroxy-terminated compounds include polyethers, polyesters, polycarbonates, polycaprolactones or combinations thereof. In some embodiments, the hydroxy-terminated compound is a polyether polyol and/or diol, a polyester polyol and/or diol, or combinations thereof. In some embodiments, the hydroxy-terminated compound has a number average molecular weight (Mn) from 200 to 10,000, or from 400 or 600 to 5,000 or 2,000. In other embodiments, the hydroxy-terminated compounds comprises a polyether and/or polyester diol of the general formula HO-(RO)ₙ-H wherein R is a hydrocarbyl group, which may contain a carbonyl group in the hydrocarbyl chain, where the hydrocarbyl group contains a total of from 2 to 20 carbon atoms, or from 2 or 4 to 8 or 6 or 4 carbon atoms, and n is an integer from 3 to 70 or from 2 or 4 to 50 or 40 or 20 carbon atoms.

In some embodiments, the elastomer contains polyether derived soft blocks. In other embodiments, the elastomer contains polyester derived soft blocks. In still other embodiments, the elastomer contains a mixture of ether and ester units. In such embodiments, the soft blocks may be predominantly polyester blocks, more than 70%, 80% or even 90% polyester blocks. In some embodiments, the soft blocks are substantially free of polyether groups and/or contain less than 10%, 5% or even 1% polyether groups. These percent values are relative to the soft blocks of the overall polymer.

The optional hard blocks may be derived from one or more lactam monomers. Suitable lactam monomers are not overly limited. In some embodiments, the lactam monomer is caprolactam, laurolactam or a combination thereof. In some embodiments the lactam monomer is caprolactam.

### The Lactam-Terminated Diisocyanate

As noted above, the elastomers of the present invention are derived from a lactam-terminated diisocyanate. The term lactam-terminated diisocyanate as used herein refers to the reaction product of diisocyanate and lactam monomers. The lactam-terminated diisocyanate may be derived from an alkylene diisocyanate. In some embodiments, the lactam-terminated diisocyanate is terminated with one or more of the lactam monomers described herein. In some embodiments, the lactam-terminated diisocyanate is terminated with caprolactam, laurolactam, or a combination thereof. To be clear, the lactam-terminated diisocyanate of the invention is not itself a diisocyanate, rather it is derived from a diisocyanate. As described herein it is derived from a diisocyanate and two lactam monomers, where the one lactam monomer attaches to each end of the diisocyanate. For example, the lactam-terminated diisocyanate of the invention may have the general structure: R¹-C(O)-N(R²)-C(O)-N(H)-R³-N(H)-C(O)-N(R⁴)-C(O)-R⁵ where each R¹, R², R⁴ and R⁵ is a alkylene group where R¹ and R² are linked to form a cyclic group and R⁴ and R⁵ are linked to form a cyclic group, and where R³ is an alkylene group. In some embodiments R¹ and R² combined contain 5 carbon atoms forming a linear portion of the cyclic group, R⁴ and R⁵ combined contain 5 carbon atoms forming a linear portion of the cyclic group, and R3 contains 6 carbon atoms, and in some embodiments is linear.

The diisocyanates useful in the preparation of the lactam-terminated diisocyanate are not overly limited. In some embodiments, suitable diisocyanates include 4,4'-methylenebis-(phenyl isocyanate); hexamethylene diisocyanate; 3,3'-dimethylbiphenyl-4,4'-diisocyanate; m-xylylene diisocyanate; phenylene-1,4-diisocyanate; naphthalene-1,5-diisocyanate; 3,3'-dimethoxy-4,4'-biphenylene diisocyanate; toluene diisocyanate; isophorone diisocyanate; 1,4-cyclohexyl diisocyanate; decane-1,10-diisocyanate; dicyclohexylmethane-4,4'-diisocyanate; or combinations thereof. One or more of these diisocyanates may be terminated with lactam monomer to provide the lactam-terminated diisocyanates of the present invention.

In some embodiments, the lactam-terminated diisocyanates of the present invention includes caprolactam-terminated hexamethylene diisocyanate, caprolactam-terminated methylene diphenyl diisocyanate, caprolactam-terminated dicyclohexylmethane diisocyanate, caprolactam-terminated toluene diisocyanate, or combinations thereof.

The lactam-terminated diisocyanate may be prepared by techniques and methods known by those skilled in the art. For example, lactam-terminated diisocyanate may be prepared by the reaction of a diisocyanate, including one or more the diisocyanates described above, with a lactam monomer, including one or more of the lactam monomers described above. The reaction may be carried out at an elevated temperature, such as 85 degrees C with stirring. The reaction may also be carried out under a nitrogen purge. A catalyst may be used in the preparation of the lactam-terminated diisocyanate. The molar ratio of diisocyanate to lactam monomer used in the preparation of the lactam-terminated diisocyanate is not overly limited and generally depends on the diisocyanate and lactam monomer used. In some embodiments, the molar ratio of diisocyanate to lactam monomer used in the preparation of the lactam-terminated diisocyanate is from 1:0.5 to 1:5 or from 1:1.5 to 1:5. In some embodiments, the ratio is roughly 2 moles of lactam monomer for every mole of diisocyanate with the allowance for some excess of lactam monomer to drive the reaction to completion. The resulting lactam-terminated diisocyanate may then be used to prepare the elastomers of the present invention.

The lactam monomers utilized in preparation of the lactam-terminated diisocyanates of the present invention are not overly limited. In some embodiments, the lactam monomer is caprolactam, laurolactam or a combination thereof. In some embodiments, the lactam monomer is caprolactam.

In some embodiments the diisocyanate used in the present invention include a diisocyanate having one para-substituted ring and on meta and/or ortho-substituted ring. In some embodiments the diisocyanate component of the invention contains 2 or less elements of symmetry. In some embodiments the diisocyanates component of the invention is substantially free of, to free of, diphenyl diisocyanates.

### The Alkylene Diol

Alkylene diols suitable for use in the present invention include diols of the general formula HO-R-OH wherein R is an alkylene group containing from 2 to 20 carbon atoms, or from 2 or 4 to 6 or 8 carbon atoms. In some embodiments R may an alkylene group of the general formula -(R¹-O)ₙ-R²-(O-R¹)ₙ- where each R¹ is independently an alkylene group containing from 2 or 4 up to 6 or 8 or 20 carbon atoms, R² is an alkylene group containing from 2 or 4 up to 6 or 8 or 20 carbon atoms, and each n is independently an integer, ranging from 0 or 1 or 2 up to 8 or 6 or 4. In some embodiments all R¹'s are the same alkylene group and all n's have the same value. In some embodiments R² contains an aryl group, for example, R² may be -Ar- or -Ar-R¹-Ar- where R1 is as defined above and Ar is an aryl group.

In some embodiments, the alkylene diol comprises ethylene glycol, 1,4-butanediol, 1,6-hexanediol, 1,3-propanediol, propylene glycol, 1,5-pentanediol, 1,9-nonanediol, 1,10-decanediol, 1,12-dodecanediol, or combinations thereof. In other embodiments, the alkylene diol comprises 1,6-hexanediol, 1,4-butanediol, hydroquinone bis(2-hydroxyethyl) ether, ethoxylated bisphenol A or combinations thereof.

The alkylene diol component of the present invention may comprise a combination of two or more alkylene diols, for example a combination of 1,6-hexanediol and 1,4-butanediol. However, in other embodiments, the invention is uses a single alkylene diol and is substantially free to free of any secondary diol, other than that which may be present as an impurity or a component of a commercial material. When present, a second alkylene diol may make up no more than 50% of the alkylene diol component, or in other embodiments from 0 to 20, or 10 to 15 percent by weight of the alkylene diol component.

### The Hydroxy-Terminated Compound

As noted above, the elastomers of the present invention may also include one or more segments of soft blocks derived from a hydroxy-terminated compound and/or derivatives thereof, which may also be referred to herein as a polyol. Suitable hydroxy-terminated compounds include polyethers, polyesters, polycarbonates, polycaprolactones or combinations thereof. When present, this component is different than the alkylene diol component described above, and is treated as a distinct component. In some embodiments, the hydroxy-terminated compound has a number average molecular weight (Mn) from 200 to 10,000, or from 400 or 600 to 5,000 or 2,000. When present this component may account for 15%, 10% or even 5% by weight of the overall composition. In some embodiments the optional polyol has a Mn of no more than 2000, 1000, or even 650, or may be from 500 to 2000, 500 to 1500, 500 to 1000 or even 650 to 1000.

In some embodiments, the hydroxy-terminated compound comprises a polyether polyol, again so long as it is a different from the alkylene diol component described above. Polyether polyols useful in the present invention include polyethylene glycol, polypropylene glycol, poly(tetramethylene ether) glycol, poly(trimethylene ether) glycol, copolymers of two or more of said diols, or combinations thereof. In some embodiments, the polyether polyol is a polyether diol, and may include poly(tetramethylene ether) glycol. In some of these embodiments, the optional polyol component may be from 30%, 50%, 80%, 90%, or even 95% poly(tetramethylene ether) glycol. In other embodiments the optional polyol component is poly(tetramethylene ether) glycol, and may be substantially free of any other polyols.

In some embodiments, the hydroxy-terminated compound comprises a polyester polyol. Suitable polyester polyols may be derived from at least one dialkylene glycol and at least one dicarboxylic acid, or an ester or anhydride thereof. The polyester polyols are generally substantially linear polyester having a number average molecular weight (Mn) of from about 500 to about 10,000, from about 500 to about 5000, or from about 1000 to about 3000, or even about 2000. Suitable polyester polyols include polyethylene and/or polydiethylene glycol adipates, polybutylene adipate, polytetramethylene glycol adipate, polyhexylene adipate, and the polyols produced from terephthalate and derivatives thereof, including, for example, dimethyl terephthalate or the digestion product of polyethylene terephthalate, reacted with diols and triols.

In some embodiments, the hydroxy-terminated compounds are substantially free of to free of polyesters, polycarbonates, and/or polycaprolactones. By substantially free of, it is meant that the hydroxy-terminated compound contains less than 10% by weight of the compound in question, or less than 5%, 1% or even 0.5% by weight of the compound in question. In such embodiments, the elastomers of the present invention contain polyether polyol derived soft blocks and are substantially free of, to free of, soft block derived from polyesters, polycarbonates, and/or polycaprolactones.

In some embodiments, the soft segments of the elastomers of the present invention are substantially free to free of unit derived from amine-terminated compounds, such as amine-terminated polyether polyols.

In some embodiments, the elastomers of the present invention are derived from (i) a lactam-terminated diisocyanate component that includes caprolactam-terminated hexamethylene diisocyanate, caprolactam-terminated methylene diphenyl diisocyanate, caprolactam-terminated dicyclohexylmethane diisocyanate, caprolactam-terminated toluene diisocyanate, or combinations thereof; and (ii) an alkylene diol component that includes ethylene glycol, 1,4-butanediol, 1,6-hexanediol, or combinations thereof.

In some embodiments, the elastomers of the present invention are substantially free to free of any units derived from diamine chain extenders. In such embodiments, the processes of making the elastomers of the present invention are substantially free to free of diamine chain extenders or similar materials and such materials are not used in the preparation of the elastomers of the present invention.

### The Lactam Monomer

The lactam monomers utilized in preparation of the lactam-terminated diisocyanates of the present invention are not overly limited. In some embodiments, the lactam monomer is an n-alkanelactam in which n is an integer and is chosen from 2 up to and including 12. More in particular the n-alkanelactam is 2-ethanelactam (azacyclopropan-2-one), 3-propanelactam (propiolactam), 4-butanelactam (butyrolactam or 2-pyrrolidone), 5-pentanelactam (valerolactam), 3-methylvalerolactam, 6-methylvalerolactam, 6-hexanelactam (caprolactam), 7-heptanelactam (enantholactam, 8-octanelactam (caprylolactam), 9-nonanelactam (pelargolactam), 10-decanelactam (caprinolactam), 11-undecanelactam or 12-dodecanelactam (laurolactam).

In some embodiments, the lactam monomer is caprolactam, laurolactam or a combination thereof. In some embodiments, the lactam monomer is caprolactam.

### Additional Additives

The compositions of the present invention may further include additional useful additives, where such additives can be utilized in suitable amounts. These optional additional additives include opacifying pigments, colorants, mineral and/or inert fillers, stabilizers including light stabilizers, lubricants, UV stabilizers (including UV absorbers), processing aids, antioxidants, anti-ozonates, and other additives as desired. Useful additional additives also include nanoparticles, nanotubes, impact modifiers, flame retardants, conductive polymers, static dissipative materials, and combinations thereof.

Suitable opacifying pigments include titanium dioxide, zinc oxide, and titanate yellow. Suitable tinting pigments include carbon black, yellow oxides, brown oxides, raw and burnt sienna or umber, chromium oxide green, cadmium pigments, chromium pigments, and other mixed metal oxide and organic pigments. Suitable fillers include diatomaceous earth (superfloss) clay, silica, talc, mica, wallostonite, barium sulfate, and calcium carbonate. If desired, stabilizers such as antioxidants can be used and include phenolic antioxidants, while useful photo stabilizers include organic phosphates, and organotin thiolates (mercaptides). Suitable lubricants include metal stearates, paraffin oils and amide waxes. Suitable UV absorbers include 2-(2'-hydroxyphenol) benzotriazoles and 2-hydroxybenzophenones. Additives can also be used to improve the hydrolytic stability of the TPU polymer. Each of these optional additional additives described above may be present in, or excluded from, the compositions of the present invention.

When present, these additional additives may be present in the compositions of the present invention from 0 or 0.01 to 30, 15, 20, 5 or 2 weight percent of the composition. These ranges may apply separately to each additional additive present in the composition or to the total of all additional additives present.

### The Process

The melt processable polyurea and/or copolyurea elastomers of the present invention may be obtained by polymerizing a lactam-terminated diisocyanate, and an alkylene diol, wherein these components are described above. This polymerization may take place in an internal mixing apparatus. The polymerization may be carried out in the presence of a catalyst, such as a metal-containing caprolactamate catalyst.

In some embodiments, the polymerization further includes (c) a component comprising a polyether, a polyester, a polycarbonate, a polycaprolactone or combinations thereof, wherein the hydroxy-terminated compound has a number average molecular weight (Mn) from 200 to 10,000. As described above, the presence of this component in the polymerization results in segments of soft blocks in the elastomers of the present invention.

In some embodiments, the polymerization further includes (d) a lactam monomer, resulting in one or more polyamide hard block segments in the copolyurea elastomer. As described above, the presence of this component in the polymerization results in segments of hard blocks in the elastomers of the present invention.

In some embodiments, both components (c) and (d) are present, while in other embodiments neither component is. When present, components (c) and/or (d) may each independently be reacted simultaneously with components (a) and (b), or be added after the reaction of components (a) and (b), for example, these components may be added midway down a reactive extruder while components (a) and (b) are added at the front of the screw.

When carrying out the reaction described herein, the molar ratio of the lactam-terminated diisocyanate to the alkylene diol, combined with the hydroxy-terminated compound when present, may be from 0.75 to 1.25, or from 0.8 to 1.2, or from 0.9 to 1.1, or even from 0.95 to 1.05. In still other embodiments this ratio (moles of lactam-terminated diisocyanate to the total moles of alkylene diol and any hydroxy-terminated compound present) is about 1:1.

In any of the embodiments described above, the polymerizations involved may be carried out in the presence of a catalyst. Suitable catalysts include alkaline catalysts, Lewis acid catalysts, as well as other catalysts known to those skilled in the art. In some embodiments, the catalyst used during the polymerization is an alkaline catalyst and/or a metal-containing caprolactamate catalyst. In some embodiments, the catalyst used includes sodium caprolactamate, potassium caprolactamate, magnesium caprolactamate, or combinations thereof. In some embodiments, the catalyst includes sodium caprolactamate. In some embodiments, the catalyst used includes sodium caprolactamate also known as sodium caprolactam, potassium caprolactamate also known as potassium caprolactam, magnesium caprolactamate also known as magnesium caprolactam, or combinations thereof. In some embodiments, the catalyst includes sodium caprolactamate.

Where a catalyst is used, the process of making the elastomers of the present invention may further include the addition of a catalyst deactivator. After such an addition, the process may then include one or more steps for the removal of any remaining catalyst and/or catalyst deactivator from the resulting material. Conventional catalyst deactivators, as well as the methods of adding and removing such materials, are compatible with the materials and process of the present invention.

The polymerization described above may be carried out in an internal mixing apparatus, including a continuous processing internal mixing apparatus. Examples include reactive extruders and similar equipment. The equipment used in the processes of the present invention may include batch equipment, continuous equipment, or combinations thereof. In some embodiments, the processes of the present invention are at least partially continuous and in other embodiments the processes are fully continuous. The processes may also include the use of one or more extruders, either in series or parallel, in order to produce the materials described above.

In some embodiments, the materials of the present invention are prepared in one or more twin screw extruders. Suitable twin screw extruders include corotating twin screw extruders as well as series of such extruders.

In some embodiments, the processes of the present invention, where lactam monomer is present as a reaction component, further comprise the step of removing any residual lactam monomer from the resulting elastomer. In addition, the process may include a step to remove any volatile component which may be present, whether it is a lactam monomer, a solvent or similar temporary component, or some other material present in the composition during the reaction and/or subsequent processing. Such steps may use thin film evaporation, falling film evaporation, wiped film evaporation, or combinations thereof to accomplish the removal. In addition, any substantially similar processing equipment and steps may be used to for the removal step.

As noted above, the elastomers of the present invention may include one or more performance additives. These additives, when present, may be added before, during and/or after the polymerization, resulting in a composition comprising the elastomer and one or more of the performance additives.

In some embodiments, the elastomers of the present invention may be prepared by feeding the lactam-terminated diisocyanate and the alkylene diol into a heated internal mixer. The materials may be feed as separate components. The optional catalyst, when present, may be added as a separate component or pre-mixed with the lactam-terminated diisocyanate and/or the alkylene diol. The optional components, such as the hydroxy-terminated compound and/or the lactam monomer, may also be as a separate component or pre-mixed with the lactam-terminated diisocyanate and/or the alkylene diol, and may also be mixed with one another. In some embodiments, these additional components are added to the internal mixer at the same point as the lactam-terminated diisocyanate and the alkylene diol, but in other embodiments, they are added at a different point in the mixer. If any additional additives are to be present, they may be added at any point along the internal mixer, or may be blended into the elastomer after the polymerization is complete, in a second internal mixer or even in a batch mixer. Vacuum may be applied near the exit of the internal mixer, to remove volatile components, and other steps described above may be included as well. The resulting elastomer exiting the second internal mixer may be sent through a water bath and/or may pass through a size reduction device, such as a strand cutter or under water pelletizer.

It is known that some of the materials described above may interact in the final formulation, so that the components of the final formulation may be different from those that are initially added. For instance, metal ions (of, e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by mixing the components described above.

### EXAMPLES

The invention will be further illustrated by the following examples, which sets forth particularly advantageous embodiments. While the examples are provided to illustrate the present invention, they are not intended to limit it.

### Example 1.

A copolyurea elastomer is prepared by reacting, in an internal mixing apparatus, 321.19 mmol of a lactam-terminated diisocyanate (itself prepared from hexamethylene diisocyanate and caprolactam monomer) with 321.19 mmol of 1,6-hexanediol in the presence of a sodium caprolactamate catalyst (6.42 mmol). The reaction is carried out at 95-110 degrees C. After several minutes the reaction is complete and the resulting material is sampled for analysis.

### Example 2.

A copolyurea elastomer is prepared using the procedure described in Example 1 reacting 240.81 mmol of a caprolactam-terminated hexamethylene diisocyanate with 240.81 mmol of 1,4-butanediol in the presence of sodium caprolactamate catalyst (4.82 mmol). A compression molded plaque is made from the resulting elastomer for analysis.

### Example 3.

A copolyurea elastomer is prepared using the procedure described in Example 1, reacting 194.53 mmol of a caprolactam-terminated 4,4'-methylenebis (cyclohexyl isocyanate) with 194.53 mmol 1,6-hexanenediol in the presence of sodium caprolactamate catalyst (3.89 mmol). A compression molded plaque is made from the resulting elastomer for analysis.

### Example 4.

A copolyurea elastomer is prepared using the procedure described in Example 1, reacting 355.81 mmol of a caprolactam-terminated hexamethylene diisocyanate with a mixture of 335.85 mmol 1,6-hexanediol and 20.00 mmol poly(tetramethylene ether) glycol having an Mn of 1000 in the presence of sodium caprolactamate catalyst (7.12 mmol). A compression molded plaque was made from the resulting elastomer for analysis.

### Example 5.

The copolyurea elastomer of Example 1 is prepared in a pilot scale reactive extruder using condition corresponding to those outlined in Example 1. The resulting materials has the following properties:

**Table I - Properties of Copolyurea Elastomer of Example 5**

| Property | Test Method | Value | Units |
|---|---|---|---|
| Hardness | ASTM 2240 | 97A 48D | Shore Hardness |
| Specific Gravitv | ASTM D792 | 1.13 | g/cc |
| Com. Set (22h/RT) | ASTM D395 | 29 | % |
| Ten. Set (200%) | ASTM D412 | 117 | % |
| Trauser Tear | ASTM D470 | 109 | lbf/in |
| Vicat Soft. Pt. | ASTM D1525 | 76.3 | °C |
| Flex Modulus | ASTM D790 | 18800 | psi |
| Tg | DSC, 2^{nd} Heat | -17.5 | °C |
| Tg (Low Temp) | DMA in Torsion | -74.0 | °C |
| Tg (Main.) | DMA ion Torsion | -13.0 | °C |
| Tc | DSC, Cool | 80.5 | °C |
| Tm | DSC, 2^{nd} Heat | 123 | °C |

Unless otherwise indicated, all percent values, ppm values and parts values are on a weight basis. Unless otherwise indicated, each chemical or composition referred to herein should be interpreted as being a commercial grade material which may contain the isomers, by-products, derivatives, and other such materials which are normally understood to be present in the commercial grade. It is to be understood that the upper and lower amount, range, and ratio limits set forth herein may be independently combined. Similarly, the ranges and amounts for each element of the invention can be used together with ranges or amounts for any of the other elements. As used herein, the expression "consisting essentially of" permits the inclusion of substances that do not materially affect the basic and novel characteristics of the composition under consideration.

As used herein, the term "substantially free of" means the composition contains less than 10%, 5%, 1%, 0.1% or even 0.01% percent by weight of the described material. The term may also mean that none of the described materials is intentionally present, but may be present in small and or trace amounts due to its presence in other materials as an impurity and/or byproduct.

## Claims

1. A melt processable polyurea and/or copolyurea elastomer comprising polyurea segments derived from a lactam-terminated diisocyanate and an alkylene diol, wherein the elastomer is obtained by polymerizing:
(a) a lactam-terminated diisocyanate; and
(b) an alkylene diol of the general formula HO-R-OH wherein R is an alkylene group containing from 2 to 20 carbon atoms;
optionally in the presence of a catalyst;
wherein the lactam-terminated diisocyanate used in the preparation of the elastomer contains less than 5 percent by weight residual lactam monomer.

2. The polyurea elastomer of claim 1, wherein the lactam-terminated diisocyanate is derived from a lactam monomer and a diisocyanate containing less than 10 % by weight of any diphenyl-containing diisocyanate where both phenyl rings of said diphenyl-containing diisocyanates are only para-substituted.

3. The polyurea elastomer of claim 1, wherein the elastomer further comprises at least one of the following:
(c) one or more segments of soft blocks derived from a component comprising a polyol different from the alkylene diol of component (b); and
(d) one or more segments of hard blocks derived from a lactam monomer.

4. The polyurea elastomer of claim 3, wherein the polyol makes up no more than 15 percent by weight of the overall composition; and
wherein the molar ratio of the lactam-terminated diisocyanate of component (a) over the combined amount of alkylene diol of component (b) and polyol of component (c), when present, is from 0.75 to 1.25.

5. The polyurea elastomer of claim 3, wherein the polyol comprises a polyether, a polyester, a polycarbonate, a polycaprolactone or combinations thereof, wherein the polyol compound has a number average molecular weight (Mn) from 200 to 10,000.

6. The polyurea elastomer of claim 1, wherein the lactam-terminated diisocyanate comprises caprolactam-terminated hexamethylene diisocyanate, caprolactam-terminated methylene diphenyl diisocyanate, caprolactam-terminated dicyclohexylmethane diisocyanate, caprolactam-terminated toluene diisocyanate, or combinations thereof; and
wherein the alkylene diol comprises ethylene glycol, 1,4-butanediol, 1,6-hexanediol, or combinations thereof.

7. A composition comprising the polyurea and/or the copolyurea elastomer as defined in any one of claims 1 to 6 and further comprising one or more performance additives;
wherein the performance additives comprise opacifying pigments, colorants, mineral and/or inert fillers, stabilizers including light stabilizers, lubricants, UV stabilizers, processing aids, antioxidants, anti-ozonates, nanoparticles, nanotubes, impact modifiers, flame retardants, conductive polymers, static dissipative materials, and combinations thereof.

8. The polyurea elastomer of claim 1, wherein the optional catalyst is present and wherein said catalyst comprises a metal-containing caprolactamate catalyst.

9. A process of preparing the melt processable polyurea and/or copolyurea elastomer as defined in claim 1, wherein the process comprises the steps of:
1. polymerizing (a) a lactam-terminated diisocyanate containing less than 5 percent by weight residual lactam monomer and (b) an alkylene diol, optionally in the presence of a catalyst,
wherein the alkylene diol is of the general formula HO-R-OH wherein R is an alkylene group containing from 2 to 20 carbon atoms;
wherein the polymerization takes place in an internal mixing apparatus.

10. The process of claim 9, wherein the polymerization further includes at least one of the following:
(c) a polyol different from the alkylene diol of component (b) comprising a polyether, a polyester, a polycarbonate, a polycaprolactone or combinations thereof, wherein the polyol compound has a number average molecular weight (Mn) from 200 to 10,000; and
(d) a lactam monomer, resulting in one or more polyamide hard block segments in the copolyurea elastomer.

11. The process of claim 9, wherein the internal mixing apparatus comprises one or more extruders; and
wherein the process optionally further comprises the step of removing any residual lactam monomer from the resulting elastomer composition.

12. A shaped polymeric article comprising the melt processable polyurea and/or copolyurea elastomer as defined in any one of claims 1 to 6.

## Patentansprüche

1. In der Schmelze verarbeitbares Polyharnstoff- und/oder Copolyharnstoff-Elastomer, das Polyharnstoffsegmente umfasst, die von einem Lactam-terminierten Diisocyanat und einem Alkylendiol abgeleitet sind, wobei das Elastomer erhalten wird durch Polymerisieren von:
(a) einem Lactam-terminierten Diisocyanat; und
(b) einem Alkylendiol der allgemeinen Formel HO-R-OH, wobei R eine Alkylengruppe ist, die 2 bis 20 Kohlenstoffatome enthält;
gegebenenfalls in Gegenwart eines Katalysators;
wobei das bei der Herstellung des Elastomers verwendete Lactam-terminierte Diisocyanat weniger als 5 Gew.-% Restlactammonomer enthält.

2. Polyharnstoff-Elastomer gemäß Anspruch 1, wobei das Lactam-terminierte Diisocyanat von einem Lactammonomer und einem Diisocyanat, das weniger als 10 Gew.-% jedes diphenylhaltigen Diisocyanats, wobei beide Phenylringe der diphenylhaltigen Diisocyanate nur para-substituiert sind, enthält, abgeleitet ist.

3. Polyharnstoff-Elastomer gemäß Anspruch 1, wobei das Elastomer weiterhin wenigstens eines der Folgenden umfasst:
(c) ein oder mehrere Segmente von weichen Blöcken, die von einer Komponente abgeleitet sind, die ein von dem Alkylendiol von Komponente (b) verschiedenes Polyol umfasst; und
(d) ein oder mehrere Segmente von harten Blöcken, die von einem Lactammonomer abgeleitet sind.

4. Polyharnstoff-Elastomer gemäß Anspruch 3, wobei das Polyol nicht mehr als 15 Gew.-% der Gesamtzusammensetzung ausmacht; und
wobei das Stoffmengenverhältnis des Lactam-terminierten Diisocyanats von Komponente (a) zu der kombinierten Menge aus Alkylendiol von Komponente (b) und Polyol von Komponente (c), falls vorhanden, 0,75 bis 1,25 beträgt.

5. Polyharnstoff-Elastomer gemäß Anspruch 3, wobei das Polyol einen Polyether, einen Polyester, ein Polycarbonat, ein Polycaprolacton oder Kombinationen davon umfasst, wobei die Polyolverbindung ein Zahlenmittel des Molekulargewichts (Mn) von 200 bis 10 000 aufweist.

6. Polyharnstoff-Elastomer gemäß Anspruch 1, wobei das Lactam-terminierte Diisocyanat Caprolactam-terminiertes Hexamethylendiisocyanat, Caprolactam-terminiertes Methylendiphenyldiisocyanat, Caprolactam-terminiertes Dicyclohexylmethandiisocyanat, Caprolactam-terminiertes Toluoldiisocyanat oder Kombinationen davon umfasst; und
wobei das Alkylendiol Ethylenglycol, 1,4-Butandiol, 1,6-Hexandiol oder Kombinationen davon umfasst.

7. Zusammensetzung, die das Polyharnstoff- und/oder Copolyharnstoff-Elastomer gemäß einem der Ansprüche 1 bis 6 umfasst und weiterhin ein oder mehrere Performance-Additive umfasst;
wobei die Performance-Additive opazifizierende Pigmente, Farbstoffe, mineralische und/oder inerte Füllstoffe, Stabilisatoren einschließlich Lichtstabilisatoren, Gleitmittel, UV-Stabilisatoren, Verarbeitungshilfsmittel, Antioxidantien Antiozonate, Nanopartikel, Nanoröhrchen, Schlagfestmacher, Flammschutzmittel, leitfähige Polymere, Antistatikmittel und Kombinationen davon umfassen.

8. Polyharnstoff-Elastomer gemäß Anspruch 1, wobei der optionale Katalysator vorhanden ist und wobei der Katalysator einen metallhaltigen Caprolactamat-Katalysator umfasst.

9. Verfahren zur Herstellung des in der Schmelze verarbeitbaren Polyharnstoff- und/oder Copolyharnstoff-Elastomers gemäß Anspruch 1, wobei das Verfahren die folgenden Schritte umfasst:
I. Polymerisieren (a) eines Lactam-terminierten Diisocyanats, das weniger als 5 Gew.-% Restlactammonomer enthält, und (b) eines Alkylendiols, gegebenenfalls in Gegenwart eines Katalysators;
wobei das Alkylendiol die allgemeine Formel HO-R-OH aufweist, wobei R eine Alkylengruppe ist, die 2 bis 20 Kohlenstoffatome enthält;
wobei die Polymerisation in einer Innenmischervorrichtung stattfindet.

10. Verfahren gemäß Anspruch 9, wobei die Polymerisation weiterhin wenigstens eines der Folgenden umfasst:
(c) ein von dem Alkylendiol von Komponente (b) verschiedenes Polyol, das einen Polyether, einen Polyester, ein Polycarbonat, ein Polycaprolacton oder Kombinationen davon umfasst, wobei die Polyolverbindung ein Zahlenmittel des Molekulargewichts (Mn) von 200 bis 10 000 aufweist; und
(d) ein Lactammonomer, das zu einem oder mehreren Polyamid-Hartblocksegmenten in dem Copolyharnstoff-Elastomer führt.

11. Verfahren gemäß Anspruch 9, wobei die Innenmischervorrichtung einen oder mehrere Extruder umfasst; und
wobei das Verfahren gegebenenfalls weiterhin den Schritt des Entfernens jeden Restlactammonomers aus der resultierenden Elastomerzusammensetzung umfasst.

12. Geformter polymerer Artikel, der das in der Schmelze verarbeitbare Polyharnstoff- und/oder Copolyharnstoff-Elastomer gemäß einem der Ansprüche 1 bis 6 umfasst.

## Revendications

1. Elastomère de polyurée et/ou copolyurée transformable à l'état fondu comprenant des segments de polyurée dérivant d'un diisocyanate à terminaison lactame et un alkylène diol, dans lequel l'élastomère est obtenu en polymérisant :
(a) un diisocyanate à terminaison lactame,
(b) un alkylène diol de formule générale HO-R-OH dans laquelle R est un groupe alkylène contenant de 2 à 20 atomes de carbone ;
éventuellement en présence d'un catalyseur ;
dans lequel le diisocyanate à terminaison lactame utilisé dans la préparation de l'élastomère contient moins de 5% en poids de monomère de lactame résiduel.

2. Elastomère de polyurée selon la revendication 1, dans lequel le diisocyanate à terminaison lactame est dérivé d'un monomère de lactame et d'un diisocyanate contenant moins de 10% en poids d'un diisocyanate contenant du diphényl où les deux cycles phényle desdits diisocyanates contenant du diphényl sont seulement para-substitués.

3. Elastomère de polyurée selon la revendication 1, dans lequel l'élastomère comprend au moins un des éléments suivants :
(c) un ou plusieurs segments de blocs mous dérivés d'un composant comprenant un polyol différent de l'alkylène diol du composant (b) ; et
(d) un ou plusieurs segments de blocs durs dérivés d'un monomère de lactame.

4. Elastomère polyurée selon la revendication 3, dans lequel le polyol ne représente pas plus de 15% en poids de la composition totale ; et
dans lequel le ratio molaire du diisocyanate à terminaison lactame du composant (a) sur la quantité combinée d'alkylène diol du composant (b) polyol et du composant (c), lorsqu'il est présent, est de 0,75 à 1,25.

5. Elastomère polyurée selon la revendication 3, dans lequel le polyol comprend un polyéther, un polyester, un polycarbonate, un polycaprolactone, ou des combinaisons de ceux-ci, dans lequel le composant polyol a un poids moléculaire moyen en nombre (Mn) allant de 200 à 10 000.

6. Elastomère polyurée selon la revendication 1, dans lequel le diisocyanate à terminaison lactame comprend du diisocyanate hexaméthylène à terminaison caprolactame, du diisocyanate méthylène diphényle à terminaison caprolactame, du diisocyanate dicyclohéxylméthane à terminaison caprolactame, du diisocyanate toluène à terminaison caprolactame, ou des combinaisons de ceux-ci ; et
dans lequel l'alkylène diol comprend de l'éthylène glycol, du 1,4-butanediol, du 1,6-hexanediol, ou des combinaisons de ceux-ci.

7. Composition comprenant l'élastomère polyurée et/ou copolyurée tel que défini dans l'une quelconque des revendications 1 à 6 et comprenant en outre un ou plusieurs additifs de performance ;
dans lequel les additifs de performance comprennent des pigments opacifiants, des colorants, des charges minérales et/ou inertes, des stabilisateurs incluant des stabilisateurs de lumière, des lubrifiants, des stabilisateurs UV, des auxiliaires technologiques, des antioxydants, des anti-ozonates, des nanoparticules, des nanotubes, des modificateurs d'impact, des retardateurs de flamme, des polymères conducteurs, des matériaux statiques dissipatifs, et des combinaisons de ceux-ci.

8. Elastomère polyurée selon la revendication 1, dans lequel le catalyseur optionnel est présent et dans lequel ledit catalyseur comprend un catalyseur caprolactame contenant du métal.

9. Procédé de préparation de l'élastomère de polyurée et/ou copolyurée transformable à l'état fondu tel que défini dans la revendication 1, où le procédé comprend les étapes de :
I. polymériser (a) un diisocyanate à terminaison lactame contenant moins de 5% en poids de monomère lactame résiduel et (b) un alkylène diol, optionnellement en présence d'un catalyseur,
dans lequel l'alkylène diol a pour formule générale HO-R-OH où R est un groupe alkylène contenant de 2 à 20 atomes de carbone ;
dans lequel la polymérisation se déroule dans un appareil de mélange interne.

10. Procédé selon la revendication 9, dans lequel la polymérisation comprend en outre un parmi les étapes suivantes :
(c) un polyol différent de l'alkylène diol du composant (b) comprenant un polyéther, un polyester, un polycarbonate, un polycaprolactone ou des combinaisons de ceux-ci, où le composé polyol a un poids moléculaire moyen en nombre (Mn) allant de 200 à 10 000 ; et
(d) un monomère de lactame, résultant en un ou plusieurs segments polyamide de blocs durs dans l'élastomère copolyurée.

11. Procédé selon la revendication 9, dans lequel l'appareil de mélange interne comprend une ou plusieurs extrudeuses ; et
dans lequel le procédé comprend optionnellement en outre l'étape d'enlever tout monomère de lactame résiduel de la composition élastomère résultante.

12. Article façonné polymère comprenant l'élastomère de polyurée et/ou copolyurée transformable à l'état fondu tel que défini dans l'une des revendications 1 à 6.
